# EUROPEAN PATENT APPLICATION

(11) **EP 2 696 069 A2**
(43) Date of publication of application: **12.02.2014**
(21) Application number: 13179137.8
(22) Date of filing: 02.08.2013
(51) Int. Cl.: F03D 7/02

(54) **Overload slip mechanism for the yaw drive assembly of a wind turbine**

(30) Priority: 10.08.2012 US 201213571713
(71) Applicant: General Electric Company, Schenectady, New York 12345 (US)
(72) Inventor: Close, Ryan, Greenville, SC 29615 (US); Conrad, Chad Robert, Greenville, SC 29615 (US); Cruden, Kristina Anne, Greenville, SC 29615 (US)
(74) Representative: Bedford, Grant Richard

(57) **Abstract**

A yaw drive assembly 42 for a wind turbine 10 has a releasable and re-engageable coupling operably configured between a drive gear 64 that engages with a yaw bearing 38 and the output of a gear assembly 60 that is coupled to a drive motor. The coupling 80 maintains a rotational drive engagement between the gear assembly output 62 and drive gear 64 up to a defined rotational torque, wherein the coupling 80 disengages the gear assembly output 62 from the drive gear 64. The coupling 80 re-engages the gear assembly output 62 to the drive gear 64upon the rotational torque decreasing to below the defined rotational torque.

## Description

The present disclosure relates in general to wind turbines, and more particularly to an assembly for limiting yaw drive loads during a yaw slippage event.

Wind power is considered one of the cleanest, most environmentally friendly energy sources presently available, and wind turbines have gained increased attention in this regard. A modem wind turbine typically includes a tower, generator, gearbox, nacelle, and one or more rotor blades. The rotor blades capture kinetic energy of wind using known foil principles. The rotor blades transmit the kinetic energy in the form of rotational energy so as to turn a shaft coupling the rotor blades to a gearbox, or if a gearbox is not used, directly to the generator. The generator then converts the mechanical energy to electrical energy that may be deployed to a utility grid.

During operation of conventional wind turbines, a yawing device or system may be used to orient the wind turbine into the direction of the wind. Exemplary yaw systems include an electrical or hydraulic motor and a high-ratio gear that acts on the toothed path of the yaw bearing and thus turns the machinery into the desired position. Conventional yaw systems include a single input shaft that receives a torque from the motor located within the nacelle, and translates this torque via a plurality of gearing assemblies to a single output torque shaft that is engaged with a yaw ring gear to facilitate yawing the wind turbine. Generally, numerous yawing devices are required within each wind turbine to supply the force needed to yaw the wind turbine, especially under less-than-optimal weather conditions, i.e. in high winds.

The design of the yaw drive systems is dictated in large part by simulated extreme loading experienced on limited occasions during the design life of the wind turbine. The requirement to fully withstand these simulated loads and maintain, for example, a 20 year service life imparts significant costs into the yaw system design. For example, certain wind tower designs utilize an active or passive brake at the yaw-tower axis to resist tower top rotation during high wind conditions. In addition, the yaw drive motors are typically equipped with brakes. The combination of these brakes is sized to withstand the worst case (simulated) extreme loads with zero slip of the yaw system. During an extreme load event, if the motor brake is overloaded and slips, the yaw system loads are not limited to motor bake slipping torque. The combination of a high gear ratio (e.g., 10,000 to 1 in certain systems) coupled with a high inertial motor results in significant yaw system loads as the motor accelerates. These yaw system loads impact not only the yaw system drive train, but are transmitted to various other components/systems as well. Thus, the extreme loads are the driving design criteria for the yaw drives, amperage, gear teeth, and so forth.

Attempts have been made to reduce the yaw system loads during an extreme event by a brakeless "slipping" yaw design wherein the intent is to have the yaw system intentionally slip when an extreme load is encountered and allow the motors to overrun. This system typically uses a lower ratio drive train and larger motor to mitigate the inertia issues discussed above with the higher gear ratio and higher speed motors. However, the challenges with this system are the increased costs associated with the motors, drives, drive transformers, drive controls, machine head cable twist during grid outages, standstill fatigue, and so forth.

The PCT application WO 2011/129292 describes a drive unit for a wind turbine wherein, in the event of an extreme load condition, a coupling component between the motor output shaft and gear input breaks or shears at a preset rotational torque, thereby isolating and protecting the motor.

A yaw drive system that is cost-effective and effectively reduces the yaw drive loads during an extreme wind event, particularly the relatively large motor inertial loads, without destroying or sacrificing a drive component would be a welcome advancement in the field.

Various aspects and advantages of the invention will be set forth in part in the following description, or may be clear from the description, or may be learned through practice of the invention.

In accordance with various aspects of the invention, a yaw drive assembly for a wind turbine is provided. The assembly includes a drive motor having an output shaft. A reduction gear assembly having an input, such as an input shaft, is coupled to the output shaft of the drive motor. A drive gear, for example a pinion gear, is coupled to an output of the gear assembly and is configured for geared engagement with a yaw system bearing, which may be a geared inner or outer race of the bearing. A releasable and re-engageable coupling is operably configured between the drive gear and gear assembly output. The coupling is engaged and maintains a rotational drive engagement between the gear assembly output and the drive gear up to a defined rotational torque. This torque may be preset to correspond to the torque expected from an extreme load condition resulting from, for example, a severe wind event. At the defined rotational torque, the coupling disengages and isolates the gear assembly output from the drive gear. The coupling re-engages the gear assembly output to the drive gear upon the rotational torque decreasing to below the defined rotational torque.

In a particular embodiment, the coupling may be any configuration of known torque limiting devices that are typically placed inline between rotating shafts. For example, the coupling may be a friction plate device placed inline between the gear assembly output shaft and an input shaft of the drive gear. Other types of torque limiting couplings may be used in this regard.

In a different embodiment, the coupling is an integral component of the interface between the gear assembly output and the drive gear and is defined by engaging members of these components. For example, the gear assembly output may include an output shaft, with the drive gear fitted over the shaft. The coupling may include a spring loaded retaining mechanism carried by one of the drive gear or shaft that engages within a recess defined in the other of the shaft or drive gear. In a particular embodiment, a plurality of the recesses are defined around the circumference of the gear assembly output shaft and a plurality of the spring loaded retaining mechanisms are spaced around an inner diameter surface of the drive gear. The retaining mechanisms disengage from the recesses at the defined rotational torque wherein the drive gear rotationally slips relative to the shaft.

The spring loaded retaining mechanisms may be variously configured. For example, the retaining mechanisms may include ball members carried by the drive gear that roll into and out of the recesses in the gear output shaft as the drive gear slips relative to the shaft.

The present invention also encompasses any configuration of a wind turbine having a yaw drive assembly as set forth herein.

Various features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention. In the drawings:
Fig. 1 is a perspective view of one embodiment of a wind turbine of the present disclosure;
Fig. 2 is a perspective view of one embodiment of a wind turbine nacelle with a yaw drive assembly;
Fig. 3 is a cross-sectional view of an embodiment of a yaw drive assembly;
Fig. 4 is a side view of components of a yaw drive assembly in accordance with aspects of the invention;
Fig 5 is a cross-sectional view of components of a yaw drive assembly in accordance with aspects of the invention; and
Fig. 6 is a side view of components of an alternate embodiment of a yaw drive assembly in accordance with aspects of the invention.

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

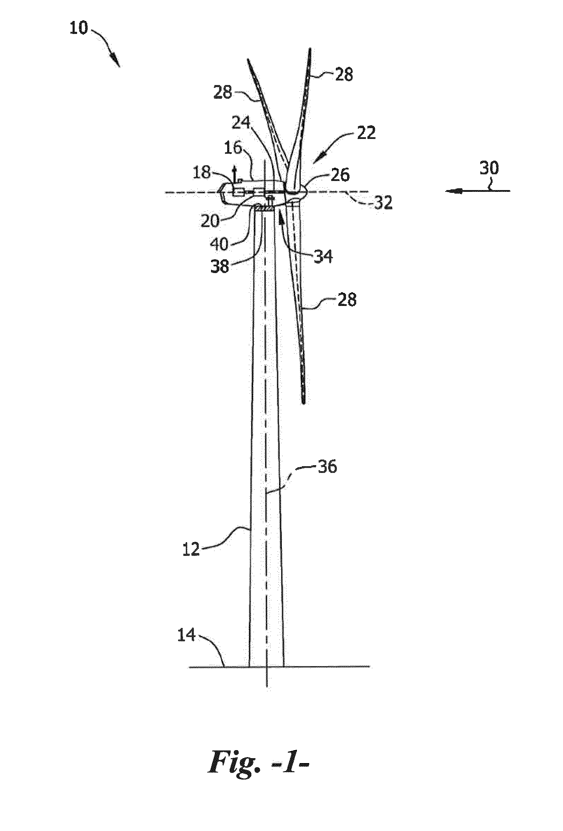

Fig. 1 is a perspective view of an exemplary wind turbine 10. In the exemplary embodiment, wind turbine 10 is a horizontal-axis wind turbine. Alternatively, wind turbine 10 may be a vertical-axis wind turbine. The wind turbine 10 includes a tower 12 that extends from a supporting surface 14, a nacelle 16 that is mounted on tower 12, a generator 18 that is positioned within nacelle 16, and a gearbox 20 that is coupled to generator 18. A rotor 22 is rotatably coupled to gearbox 20 with a rotor shaft 24. Rotor 22 includes a rotatable hub 26 and at least one rotor blade 28 coupled to and extending outwardly from hub 26.

In the illustrated embodiment, rotor 22 includes three rotor blades 28. In an alternative embodiment, rotor 22 includes more or less than three rotor blades 28. The tower 12 may be fabricated from tubular steel to define a cavity (not shown in Fig. 1) that extends between supporting surface 14 and nacelle 16. In an alternative embodiment, tower 12 is any suitable type of tower having any suitable height.

Rotor blades 28 are spaced about hub 26 to facilitate rotating rotor 22 to enable kinetic energy to be transferred from the wind into usable mechanical energy, and subsequently, electrical energy. In the exemplary embodiment, each rotor blade 28 has a length ranging from about 30 meters (m) (99 feet (ft)) to about 120 m (394 ft). Alternatively, rotor blades 28 may have any suitable length that enables wind turbine 10 to function as described herein. For example, other non-limiting examples of rotor blade lengths include 10 m or less, 20 m, 37 m, or a length that is greater than 120 m. As wind strikes rotor blades 28 from a direction 30, rotor 22 is rotated about an axis of rotation 32.

In the exemplary embodiment, a yaw system 34 is coupled to nacelle 16 and to tower 12 to adjust a yaw angle or position of nacelle 16. As used herein, the term "yaw" refers to an orientation of nacelle 16 with respect to wind direction 30. In the exemplary embodiment, yaw system 34 is configured to selectively rotate nacelle 16 and rotor 22 with respect to tower 12 about a yaw axis 36 to control the perspective of rotor blades 28 with respect to wind direction 30. During operation, as wind direction 30 changes, yaw system 34 adjusts a yaw of nacelle 16 to facilitate maintaining the perspective of rotor 22 to wind direction 30.

The yaw system 34 may be variously configured for different types of wind turbines 10. In the illustrated embodiment, the yaw system 34 includes a yaw bearing 38 coupled between nacelle 16 and tower 12 to facilitate rotating nacelle 16 with respect to tower 12. The yaw system 34 may include a yaw bearing cleaning assembly 40 as described in U.S. Pat. No. 8,004,106 coupled to nacelle 16 and positioned adjacent to yaw bearing 38. Yaw bearing cleaning assembly 40 is configured to facilitate removing debris from at least a portion of yaw bearing 38 when nacelle 16 is rotated about yaw axis 36.

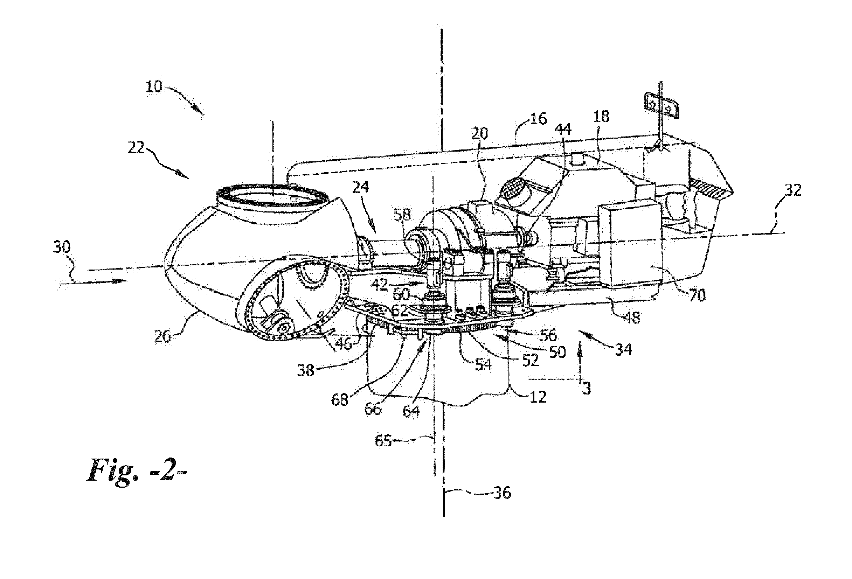

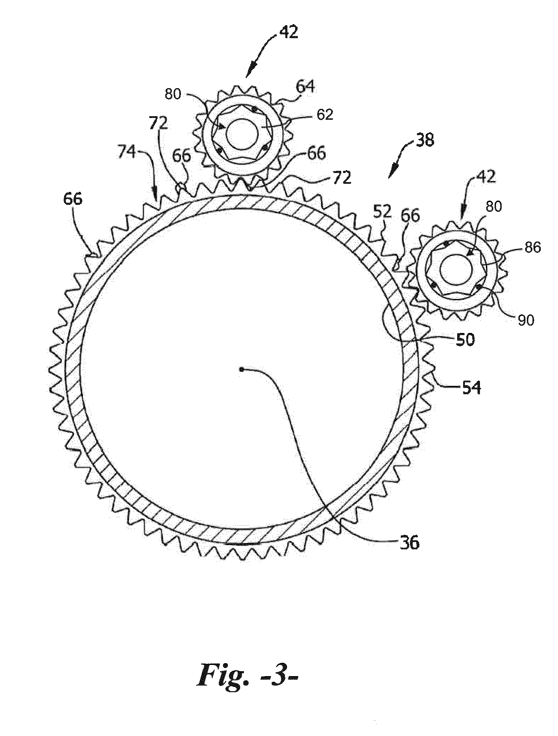

Fig. 2 is an enlarged perspective view of a portion of wind turbine 10, and Fig. 3 is a partial cross-sectional view of particular components of yaw system 34. In these exemplary embodiments, yaw system 34 includes at least one yaw drive assembly 42 that is coupled to yaw bearing 38. Yaw drive assembly 42 is configured to engage yaw bearing 38 to cause nacelle 16 and rotor 22 to rotate about yaw axis 36. Rotor shaft 24 is positioned within nacelle 16 and is coupled between rotor 22 and gearbox 20. More specifically, rotor shaft 24 is coupled to hub 26 such that as hub 26 rotates about axis of rotation 32, rotor shaft 24 rotates about axis of rotation 32. A high speed shaft 44 is coupled between gearbox 20 and generator 18. During operation of wind turbine 10, rotor shaft 24 rotates to drive gearbox 20 that subsequently drives high speed shaft 44. High speed shaft 44 rotatably drives generator 18 to facilitate production of electrical power by generator 18. In the illustrated embodiment, gearbox 20, rotor shaft 24, and yaw drive assembly 42 are each supported by a bedplate frame 46. Generator 18 is supported by a generator frame 48 that is cantilevered from bedplate frame 46. It should be appreciated that, in other embodiments, the yaw drive assembly may be supported on the tower structure and not the bedplate frame 46.

Although not depicted in the figures, it should also be appreciated that the present invention is just as applicable to direct-drive wind turbine systems, so long as the wind turbine utilizes one or more yaw drive assemblies.

In the illustrated embodiment, yaw bearing 38 is coupled to bedplate frame 46 and to tower 12. Yaw bearing 38 is configured to enable nacelle 16 to rotate with respect to tower 12 and includes an inner race 50 that is coupled to an outer race 52 such that inner race 50 rotates relative to outer race 52 about yaw axis 36. Inner race 50 is coupled to bedplate frame 46. Outer race 52 is securely coupled to tower 12, or integrated with tower 12. Outer race 52 includes a plurality of bearing teeth 54 that are spaced circumferentially about an outer radial surface 56 of outer race 52 and, in this regard, defines a ring gear that engages yaw drive assembly 42 such that an operation of yaw drive assembly 42 rotates inner race 50 with respect to outer race 52 and rotates nacelle 16 about yaw axis 36. Alternatively, outer race 52 may be coupled to bedplate frame 46 and yaw drive assembly 42 may be configured to engage inner race 50 to rotate outer race 52 with respect to inner race 50.

In the exemplary embodiment, yaw drive assembly 42 includes a yaw drive motor 58, a yaw gearbox assembly 60 that is coupled to yaw drive motor 58, a gearbox output shaft 62, and a drive gear 64 (e.g., a pinion gear) that is coupled to output shaft 62. Yaw drive motor 58 is configured to impart a mechanical force to yaw gearbox 60. Yaw gearbox assembly 60 is configured to convert the mechanical force into a rotational force, and to impart the rotational force to the output drive shaft 62. Yaw drive shaft 62 is coupled between yaw gearbox 60 and yaw pinion 64. During operation of yaw drive assembly 42, yaw drive motor 58 imparts a mechanical force to yaw gearbox 60, which in turn translates the force into rotational energy. Yaw gearbox 60 then rotates yaw drive shaft 62 about a yaw drive axis 65. Yaw drive shaft 62 rotates yaw pinion 64 about yaw drive axis 65, such that yaw pinion 64 engages yaw bearing 38 and causes nacelle 16 to rotate about yaw axis 36. More specifically, yaw pinion 64 is configured to engage bearing teeth 54 such that as yaw pinion 64 rotates, nacelle 16 rotates about yaw axis 36. In the exemplary embodiment, a lubricating material 66 is positioned between yaw pinion gear 64 and bearing teeth 54 that facilitates reducing friction between yaw pinion 64 and bearing teeth 54. Material 66 may be grease, lubricating oil, a friction reducing substance, and/or any suitable material that enables yaw system to function as described herein.

The yaw system 34 may include at least one sensor assembly 68 that is communicatively coupled to a control system 70, which is operatively coupled to yaw drive assembly 42 for controlling and monitoring the operating conditions of the yaw system 34 (as well as other systems and components of the wind turbine 10).

Figs. 3 through 6 depict various embodiments of a yaw drive assembly 42 in accordance with aspects of the invention. In the embodiment depicted in Figs. 3 through 5, the drive motor 58 includes an output shaft 59 and the reduction gear assembly 60 has an input coupled to the output shaft 59. It should be appreciated that the reduction gear assembly 60 may include any configuration of gearing or gears that serves to step-down the relatively low torque/high speed output of the drive motor 58 to a relatively high torque/low speed input to the yaw bearing 38, as commonly understood in the art. A drive gear, such as a pinion gear 64, is coupled to an output of the gear assembly 60. For example, the pinion gear 64 may be configured on a gearbox output shaft 62, as indicated in the figures. The drive gear 64 is configured for gear engagement with the yaw system bearing 38, as depicted in Fig. 3. In particular, the drive gear 64 engages with the bearing teeth 54 on one of the inner or outer races 50, 52 of the yaw bearing 38.

In the illustrated embodiment, a releasable and re-engageable coupling 80 is operably configured between the drive gear 64 and the gear assembly output 62. This coupling 80 maintains a rotational drive engagement between the gear assembly output 62 and the drive gear 64 up to a defined rotational torque, which may be a preset torque that corresponds to the torque expected from an extreme load condition, for example from a severe wind event. At this defined rotational torque, the coupling 80 disengages and isolates the gear assembly output 62 from the drive gear 64. The coupling 80 is re-engageable in the sense that when the rotational torque falls below the preset torque, the coupling 80 re-engages the gear assembly output 62 to the drive gear 64 without operator intervention or other reconfiguration of the yaw drive assembly 42.

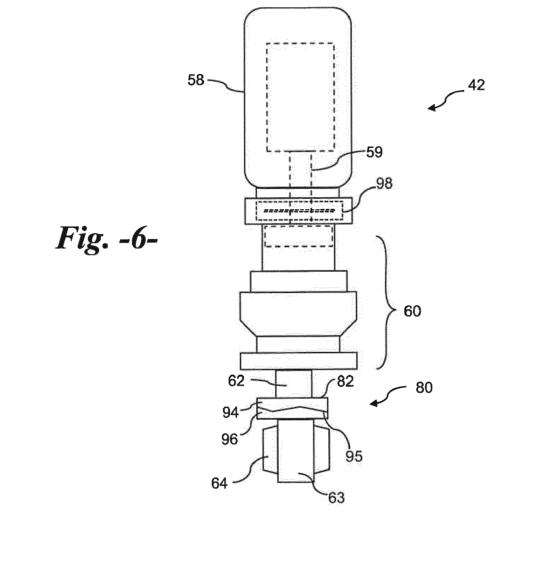

As mentioned above, the coupling 80 may be any configuration of known torque limiting devices. In an embodiment illustrated, for example, in Fig. 6, the coupling 80 is provided as an inline component 82 between the output shaft 62 and a drive gear shaft 63 on which the drive gear 64 is fixed. Various inline torque limiting devices are known in the art and may be used in this configuration. In the illustrated embodiment, the inline torque limiting device 82 is a friction plate device having a first plate 94 biased against a second plate 96 with an inter-meshing or engaged profile 95 defined between the plates 94 and 96. At the predefined rotational torque, the plates 94, 96 rotationally slip along the engaged interface 95, thereby rotationally disengaging the drive gear shaft 63 from the gear assembly output shaft 62.

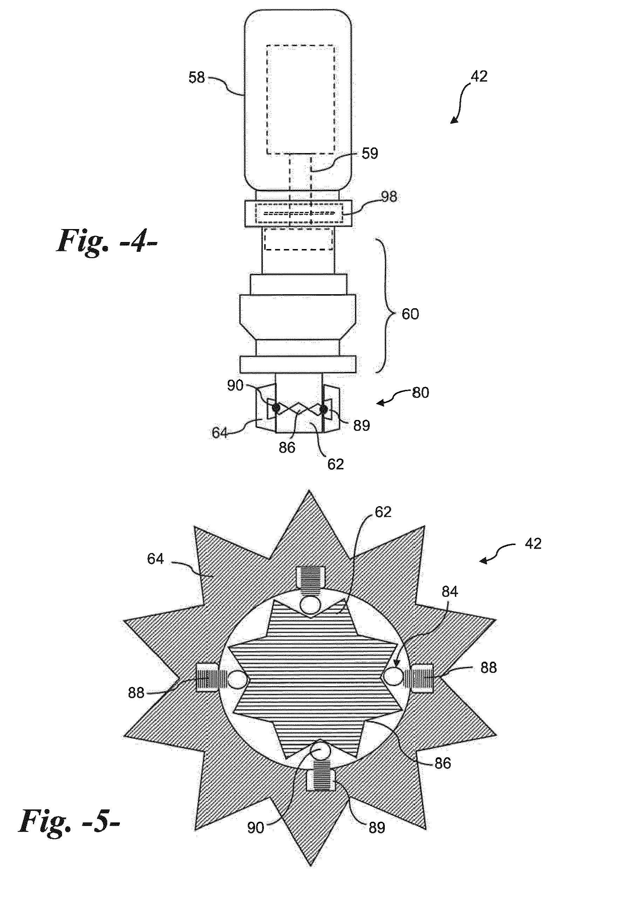

In a different embodiment illustrates in Figs. 3 through 5, the coupling 80 is defined as an integral component of the interface between the gear assembly output 62 and the drive gear 64. In this particular embodiment, the coupling 80 is defined by engaging members of each of these components. For example, the coupling 80 may include a spring loaded retaining mechanism 84 (Fig. 5) carried by one of the drive gear 64 or shaft 62 that engages within a recess 86 in the other one of the shaft or drive gear. In the illustrated embodiment, the spring loaded retaining mechanism 84 is an engaging member 90, such as a ball, roller, or other member, that is biased by a spring 88. Although not particularly depicted in the figures, the ball 90 is captured by any suitable retaining structure and is thus held relative to the inner diameter surface of the drive gear 64, with the spring 88 seated within a recess 89 defined in the inner diameter surface of the gear 64, as depicted in Fig. 5. The ball 90 engages in the recesses 86 defined around the circumference of the gear assembly output shaft 62. It should be appreciated that a plurality of the spring loaded retaining devices 84 may be circumferentially spaced around the respective components, as depicted in the figures.

Referring still to Figs. 3 through 5, it can be appreciated that, as the relative rotational torque between the output shaft 62 and the drive gear 64 increases, the force of the springs 88 will be overcome and the shaft 62 will rotationally "slip" relative to the drive gear 64 when the balls 90 disengage from their respective recesses 86 and roll into an adjacent recess. When the rotational torque decreases below the set point that allows the "slip" between the components, the shaft 62 will be again rotationally locked relative to the drive gear 64 via the spring loaded retaining mechanism 84.

Referring to Figs. 4 and 6, the present invention also contemplates an embodiment wherein any manner of inline torque limiting clutch 98 is operably configured between the drive motor output and the gear assembly input. For example, the torque limiting clutch 98 may be fixed to the drive motor output shaft 59 and the input to the gearbox assembly 60. This torque limiting clutch 98 may be releasable and re-engageable, as discussed above with respect to the coupling device 80. The torque limiting clutch 98 may be in lieu of the coupling 80, or in addition to the coupling 80. The embodiment wherein the yaw drive assembly 42 incorporates the coupling 80 essentially adjacent to the drive gear 64 in the drive train between the drive motor 58 and yaw bearing 38 may be desired in that it isolates the gearbox assembly 60, as well as the motor 58, in the event of an extreme load condition, thereby significantly decreasing the initial loads generated by the weight of the combined components, as compared to simply isolating the drive motor 58 by the use of a torque limiting clutch 98 alone.

It should be further appreciated that the present invention also encompasses any manner of wind turbine 10 (Fig. 1) that utilizes a yaw drive assembly 42 within the scope and spirit of the present invention.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A yaw drive assembly (42) for a wind turbine (10), comprising:
a drive motor having an output shaft;
a reduction gear assembly (60) having an input coupled to the output shaft of the drive motor;
a drive gear (64) coupled to an output (62) of the gear assembly (60), the drive gear configured for geared engagement with a yaw system bearing in the wind turbine;
a releasable and re-engageable coupling (80) operably configured between the drive gear (64) and gear assembly output (62), the coupling maintaining a rotational drive engagement between the gear assembly output (62) and drive gear (64) up to a defined rotational torque wherein the coupling disengages the gear assembly output (62) from the drive gear (64), the coupling (80) re-engaging the gear assembly output (62) to the drive gear (64) upon the rotational torque decreasing to below the defined rotational torque.

2. The yaw drive assembly (42) as in claims 1, wherein the coupling (80) comprises a separate inline component placed between the gear assembly output and the drive gear.

3. The yaw drive assembly (42) as in any preceding claim, wherein the coupling (80) is an integral component of an interface between the gear assembly output (62) and the drive gear (64).

4. The yaw drive assembly (42) as in any preceding claim, wherein the gear assembly output (62) comprises a shaft, the drive gear fitted over the shaft, the coupling (80) comprising a spring loaded retaining mechanism carried by one of the drive gear or shaft that engages within a recess defined in the other of the shaft or drive gear, the retaining mechanism disengaging from the recess at the defined rotational torque wherein the drive gear rotationally slips relative to the shaft.

5. The yaw drive assembly (42) as in claim 4, comprising a plurality of the spring loaded retaining mechanisms spaced circumferentially around the shaft, the shaft comprising a plurality of the recesses defined around the circumference of the shaft.

6. The yaw drive assembly (42) as in claim 4 or claim 5, wherein the retaining mechanisms comprise ball members that roll into and out of the recesses as the drive gear slips relative to the shaft.

7. The yaw drive assembly (42) as in any preceding claim, wherein the coupling (80) comprises a frictional torque limiting clutch having a first plate coupled to the gear assembly output (62) and a second plate coupled to the drive gear (64), wherein the first and second plates comprise engaged members that frictionally slide at the defined rotational torque.

8. A wind turbine (10) comprising:
a nacelle (16) mounted atop a tower (12);
a yaw drive assembly (42) operably configured between the tower (12) and the nacelle (16) to rotationally position the nacelle relative to an axis of the tower, the yaw drive assembly comprising:
a yaw bearing (38) having a ring gear;
a drive motor having an output shaft;
a reduction gear assembly (60) having an input coupled to the output shaft of the drive motor;
a drive gear (64) coupled to an output (62) of the gear assembly, the drive gear in geared engagement with the ring gear;
a releasable and re-engageable coupling (80) operably configured between the drive gear and gear assembly output, the coupling maintaining a rotational drive engagement between the gear assembly output and drive gear up to a defined rotational torque wherein the coupling disengages the gear assembly output from the drive gear, the coupling re-engaging the gear assembly output (62) to the drive gear (64) upon the rotational torque decreasing to below the defined rotational torque.

9. The wind turbine (10) as in claim 8, wherein the coupling (80) comprises a separate component placed inline between the gear assembly output and the drive gear.

10. The wind turbine (10) as in claim 8 or claim 9, wherein the coupling (80) is an integral component of an interface between the gear assembly output and the drive gear.

11. The wind turbine (10) as in any of claims 8 to 10, wherein the gear assembly output (62) comprises a shaft, the drive gear fitted over the shaft, the coupling comprising a spring loaded retaining mechanism that engages within a recess defined in one of the drive gear of the shaft, the retaining mechanism disengaging from the recess at the defined rotational torque wherein the drive gear rotationally slips relative to the shaft.

12. The wind turbine (10) as in any of claims 8 to 11, comprising a plurality of the spring loaded retaining mechanisms spaced circumferentially around the shaft, the shaft comprising a plurality of the recesses defined around the circumference of the shaft.

13. The wind turbine (10) as in any of claims 8 to 12, wherein the retaining mechanisms comprise engaging members that move into and out of the recesses as the drive gear slips relative to the shaft.

14. The wind turbine (10) as in any of claims 8 to 13, wherein the coupling (80) comprises a frictional torque limiting clutch having a first plate coupled to the gear assembly output (62) and a second plate coupled to the drive gear (64), wherein the first and second plates comprise engaged members that frictionally slide at the defined rotational torque.

15. The wind turbine (10) as in any of claims 8 to 14, comprising a plurality of the drive motors and associated gear assemblies and couplings spaced around the ring gear in the nacelle (16).
